## Europäisches Patentamt

## European Patent Office

## Office européen des brevets

(19)

(11) Numéro de publication: **0 106 718**
**B1**

(12)

# FASCICULE DE BREVET EUROPEEN

(45) Date de publication du fascicule du brevet:
**23.04.86**

(51) Int. Cl.⁴: **F 16 D 55/224**, F 16 D 55/02

(21) Numéro de dépôt: **83401681.8**

(22) Date de dépôt: **19.08.83**

(54) Ressort de patins de frein à disque à étrier coulissant, et frein à disque équipé d'un tel ressort.

(30) Priorité: **30.09.82 FR 8216450**

(43) Date de publication de la demande:
**25.04.84 Bulletin 84/17**

(45) Mention de la délivrance du brevet:
**23.04.86 Bulletin 86/17**

(84) Etats contractants désignés:
**DE FR GB IT SE**

(56) Documents cités:
**DE - A - 2 345 733**
**DE - A - 2 514 383**
**FR - A - 2 245 227**
**FR - A - 2 318 347**
**FR - A - 2 423 680**
**FR - A - 2 448 071**

(73) Titulaire: **BENDIX France, 126, rue de Stalingrad,
F-93700 Drancy (FR)**

(72) Inventeur: **Couvez, Marc, 73 Rue Hemet,
F-93300 Aubervilliers (FR)**

(74) Mandataire: **Le Moenner, Gabriel et al, SERVICE
BREVETS BENDIX 44, Rue François 1er, F-75008 Paris
(FR)**

## Description

La présente invention concerne les ressorts de patins de freins à disque et, plus particulièrement, de voûte de patins pour frein à disque du type comportant un étrier monté coulissant sur un support fixe au moyen d'au moins deux surfaces de coulissement axiales coopérantes sur l'étrier et le support fixe, respectivement, et deux patins de friction reçus en ancrage et en coulissement dans une ouverture du support fixe, l'étrier comportant une partie de voûte présentant, à l'aplomb des patins de friction, une ouverture traversante pour le montage élastique, dans cette ouverture, du ressort, le ressort comprenant une partie d'appui destinée à porter contre une protubérance de chaque patin faisant au moins partiellement saillie radialement dans l'ouverture.

Un frein à disque pourvu d'un tel ressort de patins est décrit dans le document FR-A-2 423 680. Toutefois, dans ce document, le ressort est monté élastiquement dans la partie intérieure de la voûte de l'étrier au moyen de pattes symétriques reçues dans des évidements de la face intérieure de l'étrier, le ressort étant positionné dans l'ouverture par des pattes radiales, l'ensemble du ressort se trouvant situé au voisinage immédiat de la périphérie du disque et soumis de ce fait à des conditions sévères de température en fonctionnement.

La présente invention a pour objet de proposer un ressort de patins de frein du type sus-mentionné, de structure simple, de faible coût de fabrication et disposé à l'écart, radialement, de l'interface entre la face interne de la voûte et la périphérie du disque.

Pour ce faire, selon une caractéristique de l'invention, le ressort est constitué d'une partie de montage latérale unique formant pince, destinée à être engagé élastiquement sur une zone latérale amincie de l'ouverture de la voûte de l'étrier, se prolongeant par une partie d'appui s'étendant transversalement dans l'ouverture en porte-à-faux par rapport à la partie de montage latérale.

Selon une caractéristique plus particulière de l'invention, la partie d'appui du ressort s'étendant en porte-à-faux forme, au voisinage de son extrémité libre, une ligne de contact avec les protubérances des patins de friction parallèle à l'axe du disque du frein.

La présente invention a pour autre objet de proposer un frein à disque du type mentionné ci-dessus, agencé pour être équipé d'un ressort de patins selon l'invention, tel que défini dans les revendications 1 à 6.

A cet effet, selon une autre ceractéristique de l'invention, la voûte de l'étrier comporte, sur un côté de l'ouverture, des évidements en retrait radialement opposés définissant entre eux une cloison de montage formant la zone latérale amincie de montage de la partie de montage latérale unique du ressort.

La description suivant représente des modes de réalisation de la présente invention, donnés à titre illustratif mais nullement limitatif, faite en relation avec les dessins annexés, sur lesquels:

la fig. 1 est une vue en bout, moitié en coupe, d'un premier mode de réalisation d'un frein à disque équipé d'un ressort selon l'invention;

la fig. 2 est une vue du dessus, partiellement en coupe, du frein de la fig. 1;

la fig. 3 est une vue en coupe suivant la ligne III-III de la fig. 1; et

la fig. 4 est une vue en bout, du côté extérieur, d'un autre mode de réalisation d'un frein équipé d'un ressort de patins selon l'invention.

Dans la description qui va suivre et sur les dessins, les éléments identiques ou analogues portent les mêmes chiffres de référence.

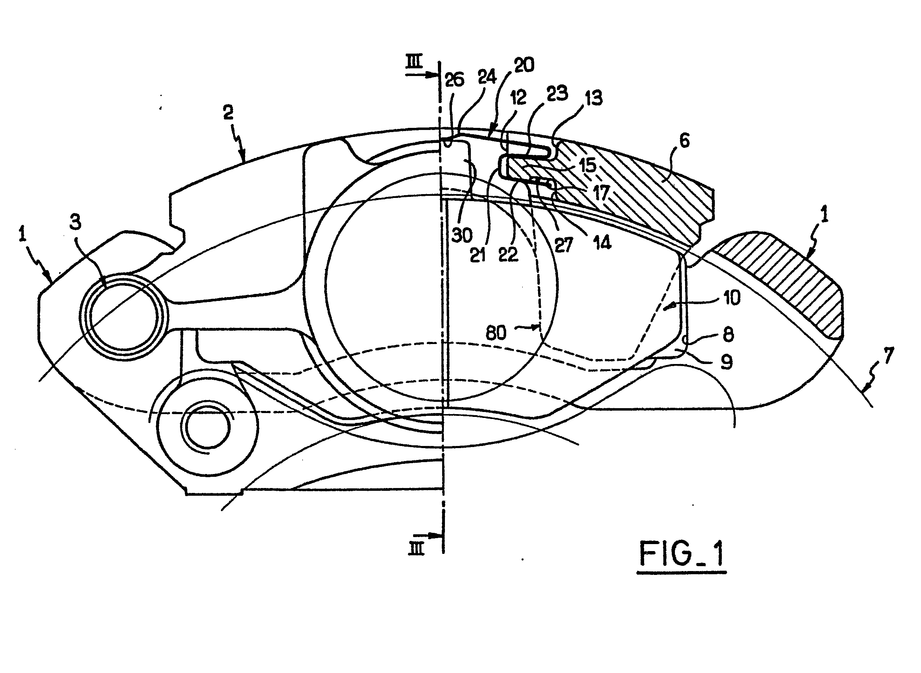

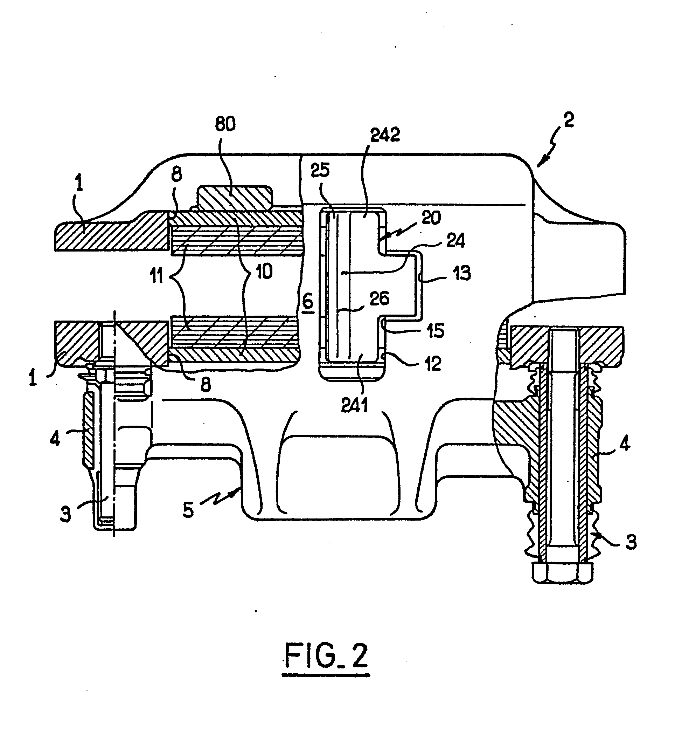

Dans le mode de réalisation des figures 1 à 3, le frein à disque comporte un support fixe 1 en forme de fourche sur lequel un étrier 2 est supporté à coulissement axial au moyen d'au moins une colonnette axiale 3 fixée par exemple au support fixe et reçue à coulissement dans une portion annulaire 4 de la partie intérieure de l'étrier 2 dans laquelle est ménagé le moteur hydraulique 5 d'actionnement du frein. L'étrier 2 comporte une partie de voûte 6 chevauchant le disque 7 du frein et formant, à l'opposé du moteur hydraulique 5, un nez d'étrier 80. Les bras de la fourche du support fixe 1 définissent une ouverture délimitée latéralement par des portées axiales 8 dans lesquelles sont reçues à ancrage et à coulissement les extrémités latérales 9 des plaques support 10 des patins de friction, pourvues de garnitures de friction 11, disposés de part et d'autre du disque 7, au dessous de la voûte 6 de l'étrier 2. Cette voûte 6 comporte, à l'aplomb de la partie supérieure médiane des patins, une ouverture traversante 12 dans laquelle est monté un ressort de patins 20, destiné à appliquer sur les plaques support 10 des patins de frein un effort radial plaquant convenablement les plaques support 10 contre les surfaces du butée et d'ancrage de coulissement 8 du support fixe 1 et faisant fonction de ressort anti-bruit tant pour les patins que pour l'étrier 2.

Un côté latérale (parallèle à l'axe du disque 7) de l'ouverture 12 comporte deux évidements latéralement en retrait 13 et 14 ouvrant respectivement sur les faces extérieure et intérieure de la voûte 6 de façon à définir entre eux une cloison latérale 15 d'extension axiale réduite ayant des faces supérieure et inférieure sensiblement parallèles au plan tangent à la périphérie du disque 7 à l'aplomb de cette cloison 15.

Le ressort de patins 20 comprend une partie de montage 21 en forme de U dont les branches 22 et 23 ont une longueur sensiblement identique et une même largeur légèrement inférieure à la largeur (dans le sens axial) des évidements 13 et 14 de la voûte d'étrier 16. La distance, au repos, entre les deux branches 22 et 23 est inférieure à l'épaisseur (dans le sens radial) de la cloison 15. La branche intermédiaire 23 se prolonge par une partie repliée sensiblement à 180° et formant un bras d'appui 24 dont la partie d'extrémité s'élargit latéralement, au-delà de la base du U formée par la partie de montage 21, en deux ailes 241 et 242 ayant une largeur cumulée inférieure à la largeur (dans le sens axial) de l'ouverture 12 de la voûte 6 de l'étrier de façon à ponter les plaques support 10 des patins lorsque ceux-ci sont munis de garnitures 11 neuves. La portion d'extrémité 25 des ailes 241 et 242 est conformée pour s'étendre dans un premier temps vers le bas en direction de la partie de montage 21, puis pour remonter vers le haut (comme vu sur la fig. 1) afin de définir une ligne de contact inférieure 26 destinée à venir en appui sur des saillies radiales 30 des plaques support 10 des patins de frein, la ligne de contact 26 étant sensiblement confondue avec le plan radial médian du frein de façon é exercer sur les patins un effort véritablement radial.

Comme on le voit bien sur la fig. 1, les saillies médianes 30 des plaques support 10 des patins de frein s'étendent largement vers le haut dans l'ouverture 12 de la voûte d'étrier 6, jusqu'à un niveau légèrement inférieur au plan tangent supérieur de la voûte d'étrier 6, au-delà, radialement, de la cloison 15.

On comprendra aisément que le ressort 20, réalisé à partir d'une lame d'acier à ressort, est mis très simplement en place dans l'ouverture 12 en engageant élastiquement à force la partie de montage 21 sur la cloison 15, le bras en porte-à-faux 24, renforcé dans son effet élastique par l'épingle à cheveu le raccordant à l'aile 23, étant déformé en flexion lors de la mise en place de l'étrier sur les patins 10, 11. De préférence, l'évidement inférieur 14 comprend un décrochement en retrait vers le haut 17 facilitant l'introduction de l'aile inférieure 22 de la partie de montage 21, cette aile 22 pouvant être pourvue d'une petite patte 27 rabattue vers l'intérieur du U pour assurer le maintien de la partie de montage 21 sur la cloison 15 en étant reçu dans le décrochement 17 et s'opposant ainsi à tout décrochement intempestif de la partie de montage 21 de la cloison 15 sur laquelle elle est engagée élastiquement.

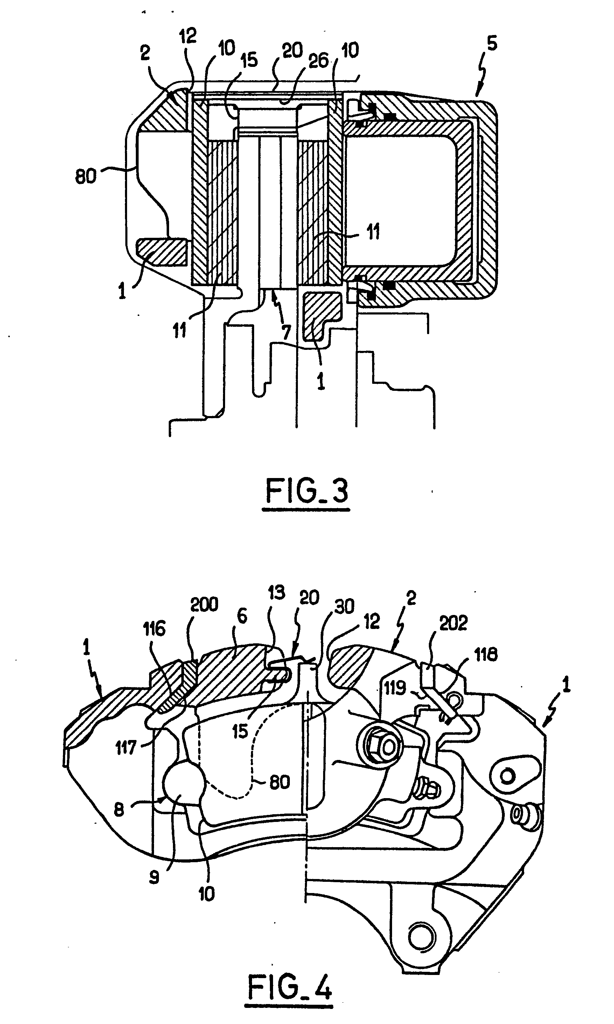

On a représenté sur la fig. 4 une variante de réalisation d'un frein selon l'invention qui se distingue du mode de réalisation précédent en ce sens que l'étrier 2 est monté coulissant sur la fourche du support fixe 1 au moyen de surfaces profilées axiales 116, 118 et 117, 119 complémentaires, formées respectivement sur le support fixe 1 et l'étrier 2, avec interposition entre elles de clavettes de coulissement 200 et 202, le ressort de patins 20 ainsi que son mode de montage dans la voûte 6 étant en tous points identique aux précédents.

En se reportant à la fig. 4 on comprendra aisément que la portion d'extrémité 25 du ressort 20 peut être prolongée de manière à ce que le côté latéral situé à droite de l'ouverture 12 forme une butée au ressort 20 et évite son échappement accidentel. Une telle butée peut bien évidemment être assurée également sur le frein de la fig. 1.

**Revendications**

1. Ressort de voûte de patins de frein à disque du type comportant un étrier (2) coulissant sur un support fixe (1) au moyen d'au moins deux surfaces de coulissement axiales (3-4; 117, 119-116, 118) sur l'étrier et le support fixe et deux patins de friction (10, 11) reçus en ancrage et en coulissement dans une ouverture (8) du suport fixe, l'étrier comprenant une partie de voûte (6) présentant, à l'aplomb des patins de friction, une ouverture centrale (12) pour le montage élastique, dans cette ouverture, du ressort de patins (20), le ressort (20) comprenant une partie d'appui (24) destinée à porter contre une protubérance (30) de chaque patin faisant au moins partiellement saillie radialement dans l'ouverture (12), caractérisé en ce que le ressort (20) est constitué d'une partie de montage latérale unique formant pince (21), destinée à être engagée élastiquement sur une zone latérale amincie (15) de l'ouverture (12) de la voûte de l'étrier, se prolongeant par une partie d'appui (24) s'étendant transversalement dans l'ouverture (12) en porte-à-faux par rapport à la partie de montage latérale (21).

2. Ressort selon la revendication 1, caractérisé en ce que la partie d'appui (24) s'étendant en porte à faux forme, au voisinage de son extrémité libre, une ligne de contact (26) avec les protubérances (30) des patins de friction (10, 11) parallèle à l'axe du disque du frein (7).

3. Ressort selon la revendication 1 ou la revendication 2, caractérisé en ce que la partie de montage (21) forme un chenal sensiblement en forme de U (22, 23) destiné à être engagé élastiquement sur une partie de cloison transversale (15) de la voûte (6) de l'étrier (2).

4. Ressort selon la revendication 3, caractérisé en ce que la partie de montage comprend des première (22) et seconde (23) ailes sensiblement parallèles et de même extension, la seconde aile (23) étant prolongée en repliement par la partie d'appui (24).

5. Ressort selon l'une des revendications 1 à 4, caractérisé en ce que la partie d'appui (24, 241, 242) a une extension axiale supérieure à celle de la partie de montage (21).

6. Ressort selon l'une des revendications précédentes, caractérisé en ce qu'il est réalisé à partir d'une lame d'acier à ressort.

7. Frein à disque, du type comportant un étrier (2) coulissant sur un support fixe (1) au moyen d'au moins deux surfaces de coulissement axial (3-4; 117, 119-116, 118) sur l'étrier et le support fixe, et deux patins de friction (10, 11) reçus en encrage et en coulissement dans une ouverture (8) du support fixe (1), l'étrier (2) comprenant une partie de voûte (6) présentant, à l'aplomb des patins de friction, une ouverture centrale (12) pour le montage élastique d'un ressort selon l'une des revendications 3 à 6, caractérisé en ce que la voûte (6) de l'étrier (2) comporte, sur un côté de l'ouverture (12), des évidements en retrait radialement opposés (13, 14) définissant entre eux ladite partie de cloison transversale (15) pour le montage élastique de la partie de montage (21) du ressort (20).

8. Frein à disque selon la revendication 7, caractérisé en ce que chaque plaque support (10) des patins de friction comprend une protubérance centrale (30) s'étendant normalement, en position de montage, radialement dans l'ouverture (12) de la voûte (6) au-delà de ladite partie de cloison (15).

**Claims**

1. A brake shoe spring for a disc brake of the type comprising a caliper (2) sliding on a fixed support (1) by means of at least two axial guide surfaces (3-4; 117, 119-116, 118) of the caliper and fixed support, and a pair of friction members (10, 11) anchored and sliding in an opening (8) of the fixed support, the caliper comprising a bridge portion (6) presenting at the area of the friction members a central opening (12) for resiliently mounting the brake shoe spring (20) in said opening, the spring (20) comprising an engagement portion (24) adapted to engage a projection (30) of each brake shoe, which at least partially projects radially into the opening (12), characterized in that the spring (20) is comprised of a pinzers-forming single lateral mounting portion (21) adapted to resiliently engage a lateral reduced area (15) of the opening (12) of the caliper bridge, while being prolongated by an engagement portion (24) extending transversely in the opening (12) in cantilever fashion with respect to the lateral mounting portion (21).

2. The spring of claim 1, characterized in that the engagement portion (24) extending in cantilever fashion forms adjacent its free end a line (26) of contact with the projections (30) of the friction shoes (10, 11), which is parallel to the axis of the disc brake (7).

3. The spring of claim 1 or 2, characterized in that the mounting portion (21) forms a substantially U-shaped channel (22, 23) adapted to resiliently engage a transverse wall portion (15) of the bridge (6) of the caliper (2).

4. The spring of claim 3, characterized in that the mounting portion comprises first (22) and second (23) legs which are substantially parallel and of the same extension, the second leg (23) being rebent to be prolongated by said engagement portion (24).

5. The spring of any of claims 1-4, characterized in that the engagement portion (24, 241, 242) has an axial extension greater than that of the mounting portion (21).

6. The spring of any of the preceding claims, characterized in that it is made from a spring steel leaf.

7. A disc brake of the type comprising a caliper (2) sliding on a fixed support (1) by means of at least two axial guide surfaces (3-4; 117, 119-116, 118) of the caliper and the fixed support, and two friction shoes (10, 11) anchored and slidingly received in an opening (8) of the fixed support (1), the caliper (2) comprising a bridge portion (6) presenting at the area of the friction shoes a central opening (12) for resilient mounting of a spring according to any of claims 3-6, characterized in that the bridge (6) of the caliper (2) comprises at one side of the opening (12) opposed, radially offset recesses (13, 14) defining between them said transverse wall portion (15) for resiliently mounting the mounting portion (21) of the spring (20).

8. The disc brake of claim 7, characterized in that each support plate (10) of the brake shoes comprises a central projection (30) normally extending radially into the opening (12) of the bridge (6) beyond said wall portion (15) when in the mounting position.

**Patentansprüche**

1. Feder für die Bremsbacken einer Scheibenbremse mit einem Bremssattel (2), der auf einem festgelegten Bremsträger (1) mittels zweier axialer Gleitflächen (3-4; 117, 119-116, 118) am Bremssattel und Bremsträger gleitet, und zwei Bremsbacken (10, 11), die in einer Öffnung (8) des Bremsträgers gleitend gehalten sind, wobei der Bremssattel einen Stegabschnitt (6) aufweist, der an der Stelle der Bremsbacken eine zentrale Öffnung (12) für die elastische Montage der Feder (20) in dieser Öffnung besitzt, wobei die Feder (20) einen Anlegeabschnitt (24) aufweist, der an einem Vorsprung (30) jedes Bremsbackens anliegt, der zumindest teilweise radial in die Öffnung (12) vorsteht, dadurch gekennzeichnet, dass die Feder (20) von einem eine Zange (21) bildenden einzigen seitlichen Montageabschnitt gebildet wird, der an einem verdünnten seitlichen Bereich (15) der Öffnung (12) des Bremssattelsteges elastisch angreift, wobei er von einem Anlegeabschnitt (24) verlängert wird, der sich in der Öffnung (12) in Querrichtung erstreckt und hierbei bezüglich des seitlichen Montageabschnittes (21) frei kragend übersteht.

2. Feder nach Anspruch 1, dadurch gekennzeichnet, dass der frei kragend überstehende Anlegeabschnitt (24) in Nähe seines freien Endes eine zur Achse der Bremsscheibe (7) parallel verlaufende Berührungslinie (26) mit den Vorsprüngen (30) der Bremsbacken (10, 11) bildet.

3. Feder nach Anspruch 1 oder 2, dadurch gekennzeichnet, dass der Montageabschnitt (21) einen im wesentlichen U-förmigen Kanalabschnitt (22, 23) bildet, der elastisch auf einem quer verlaufenden Wandabschnitt (15) des Steges (6) des Bremssattels (2) sitzt.

4. Feder nach Anspruch 3, dadurch gekennzeichnet, dass der Montageabschnitt einen ersten (22) und zweiten (23) Arm aufweist, die im wesentlichen parallel verlaufen und die gleiche Erstreckung haben, wobei der zweite Arm (23) durch Umbiegen von dem Anlegeabschnitt (24) verlängert wird.

5. Feder nach einem der Ansprüche 1-4, dadurch gekennzeichnet, dass der Anlegeabschnitt (24, 241, 242) eine axiale Erstreckung hat, die grösser ist als die des Montageabschnitts (21).

6. Feder nach einem der vorhergehenden Ansprüche, dadurch gekennzeichnet, dass sie aus einem Federstahlblatt hergestellt ist.

7. Scheibenbremse mit einem Bremssattel (2), der aus einem festgelegten Bremsträger (1) mittels zweier axialer Gleitflächen (3-4; 117, 119-116, 118) am Bremssattel und Bremsträger gleitet, und zwei Bremsbacken (10, 11), die in einer Öffnung (8) des Bremsträgers (1) gleitend gehalten sind, wobei der Bremssattel (2) einen Stegabschnitt (6) aufweist, der an der Stelle der Bremsbacken eine zentrale Öffnung (12) für die elastische Montage einer Feder nach einem der Ansprüche 3-6 aufweist, dadurch gekennzeichnet, dass der Steg (6) des Bremssattels (2) auf einer Seite der Öffnung (12) entgegengesetzte, radial zurückspringe Ausnehmungen (13, 14) aufweist, die zwischen sich den besagten quer verlaufenden Wandabschnitt (15) für die elastische Halterung des Montageabschnittes (21) der Feder (20) bilden.

8. Scheibenbremse nach Anspruch 7, dadurch gekennzeichnet, dass jeder Belagträger (10) der Bremsbacken einen zentralen Vorsprung (30) aufweist, der sich normalerweise, in der Montagestellung radial in der Öffnung (12) des Steges (6) über den Wandabschnitt (15) hinauserstreckt.

FIG_1

0 106 718

## FIG. 2

FIG_3

FIG_4